# EUROPEAN PATENT SPECIFICATION

(11) **EP 0 532 220 B1**
(45) Date of publication and mention of the grant of the patent: **04.03.1998**
(21) Application number: 92307967.7
(22) Date of filing: 02.09.1992
(51) Int. Cl.: G06K 7/10

(54) **Bar code scanner and method of operation**
Barcodeleser und seine Wirkungsweise
Lecteur de code barre et sa manière de fonction

(30) Priority: 13.09.1991 US 759316
(43) Date of publication of application: 17.03.1993
(73) Proprietor: NCR International, Inc., Dayton, Ohio 45479 (US)
(72) Inventor: Collins, Donald A., Jr., Ithaca, New York 14850 (US); Wike, Donald A. Jr., Sugar Hill, Georgia (US)
(74) Representative: Irish, Vivien Elizabeth

(56) References cited:
- DE-B- 2 238 816
- US-A- 3 718 761
- US-A- 4 795 224
- US-A- 4 871 904
- US-A- 4 971 410

## Description

The present invention relates to a bar code scanner.

In present-day merchandising point-of sale checkout systems, data pertaining to the purchase of a merchandise item is obtained by reading data encoded indicia such as bar code label printed on or attached to the purchased merchandise item. Reading systems which have been constructed to read this type of bar code include stationary optical scanning systems normally located within the cabinet structure of a checkout counter and hand-held laser scanners which emit a single or multiple line scan pattern and which are manually moved past the bar code label which is to be read. In known scanners, the scan pattern is generated by deflecting a number of scanning light beams off a plurality of pattern forming mirrors. The number of scanning lines in the scan pattern is determined by the number of scanning beams generated or the number of pattern mirrors utilized. Such a scanner is known from US 4871 904. A greater number of scanning lines in the pattern will produce more efficient scanning operations and the known scanners are disadvantageous in that the scan pattern, particularly in hand held scanners, is restricted. Depending on the size of the bar code label to be read, prior hand-held bar code scanners have also utilized interchangeable scanning heads which produce different scanning patterns which vary in the size and the number of scan lines forming the scanning pattern.

From DE-A-2238816 there is known an optical scanner including a first rotatable polygonal mirror which breaks up a light beam emitted from a light source into scanning beams which are directed to a second rotatable polygonal mirror. From this second mirror the scanning beams are directed on to a scanning area as a rotating scan pattern.

It is an object of the present invention to provide a bar code scanner that generates a scanning pattern having an improved density of scan lines for scanning different size bar code labels with the same reading efficency.

In accordance with the present invention there is provided a bar code scanner comprising a first scanning means including a plurality of stationary pattern forming mirrors and a rotatable optical transceiver driven by first drive means for directing a light beam towards said pattern forming mirrors to produce a plurality of different scan lines forming a multiple line scan pattern and for collecting light reflected from articles having coded indicia to be scanned, characterized by a second scanning means comprising a single mirror which is mounted on a rotatable drive shaft driven by second drive means, and which is arranged to reflect the scan lines from said first scanning means towards said articles, said mirror being offset from the perpendicular to the axis of rotation of said drive shaft so as to rotate said first multiple line scan pattern about an axis and thereby generate a second multiple line scan pattern having a greater number of scan lines than said first scan pattern.

The invention advantageously provides an optical scanning device which generates a very dense multiple line scan pattern for scanning a bar code label and in particular a pattern which will read damaged bar codes or read truncated bar code labels.

It is a further advantage of this invention that a compact optical scanning device can be provided which can be used as a hand-held scanner or a stationary scanner and which doesn't require the scan pattern to be tagged onto a bar code label in order to read it and also which is simple in construction and low in cost.

The invention is described further hereinafter, by way of example only, with reference to the accompanying drawings in which:
Fig. 1 is a perspective view of a compact optical scanner in which the present invention is incorporated;
Fig. 2 is a side diagrammatic view of an optical scanner embodying the present invention and illustrating the arrangement of the scan module and the tilted reflecting mirror;
Fig. 3 is a more detailed schematic representation of the scanning system of the optical scanner of Fig. 2;
Fig. 4 is a sectional side view of the scan module of Fig. 3;
Fig. 5 is a plan view of the scan pattern generated by the scan module of Fig. 4; and
Fig. 6 is a plan view of the scan pattern generated by a tilted reflecting mirror.

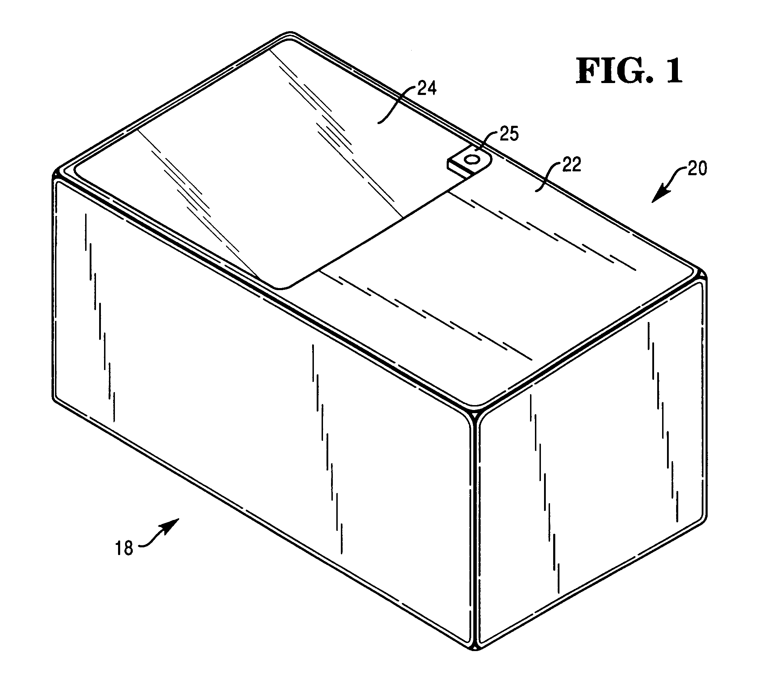

Referring now to Fig. 1, there is shown a perspective view of a compact optical scanner 18. The scanner 18 comprises a box-like housing structure 20 which includes a cover portion 22 having located at one end a glass covered aperture 24. Mounted in one corner of the aperture is an infrared detector 25 whose function will be described more fully hereinafter. The housing structure 20 is 7.62 cm wide, 15.24 cm long and 5.08 cm thick, providing an interior volume of 589.93 cm . These dimensions enable an operator to grasp the housing structure 20 for use as a handle held scanner. If the housing structure 20 is positioned on a supporting surface, the scanner may function as a stationary scanner where a merchandise item is moved across the top surface 22 of the housing structure 20 to locate a bar code label adjacent the aperture 24.

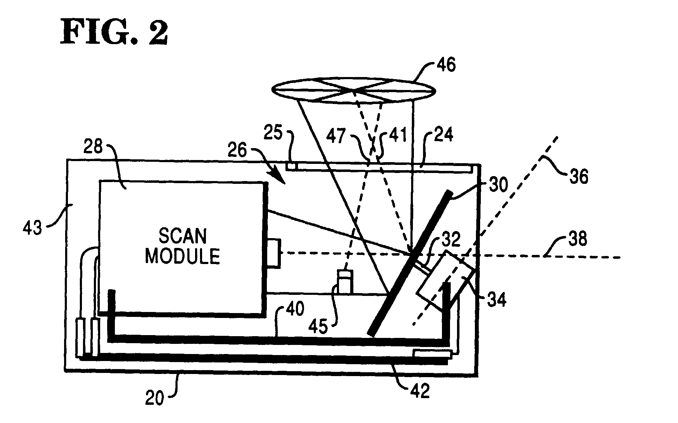

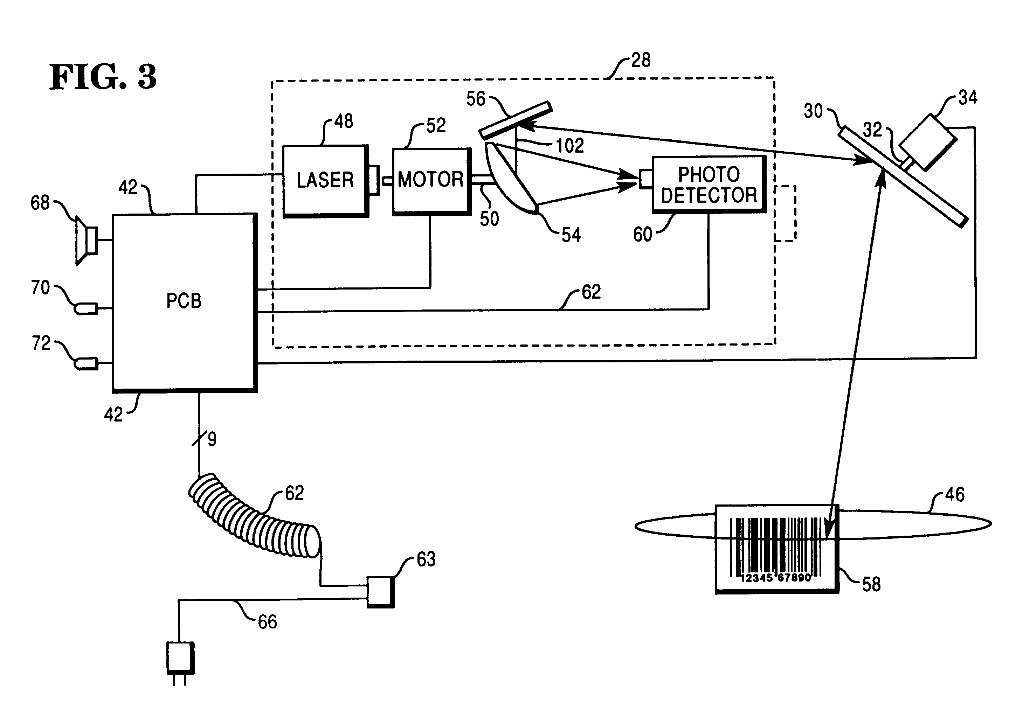

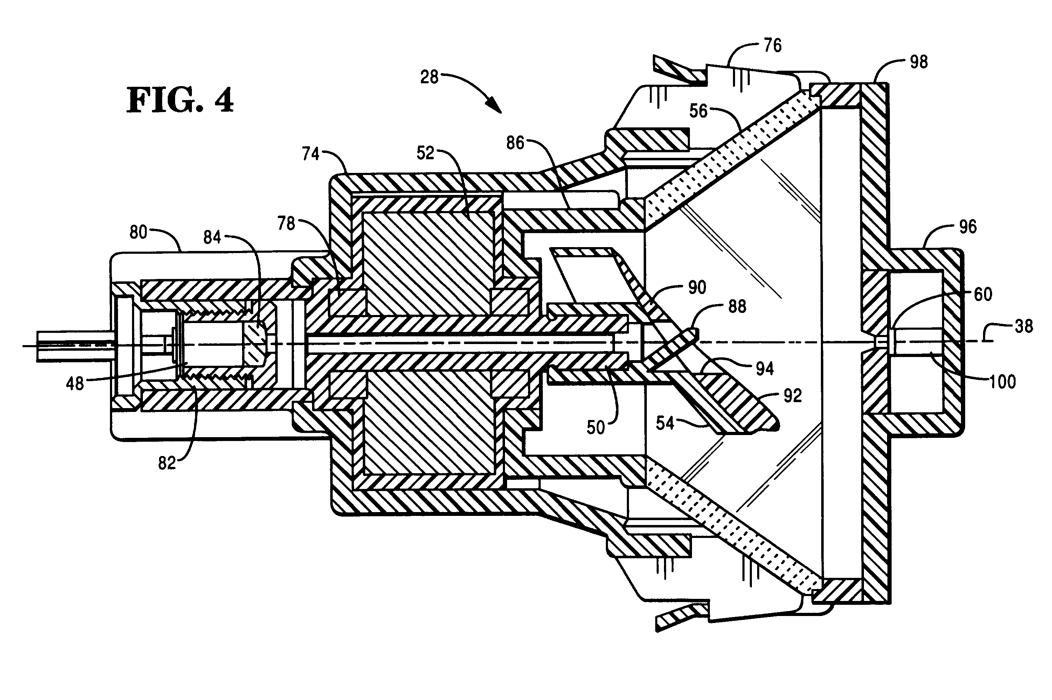

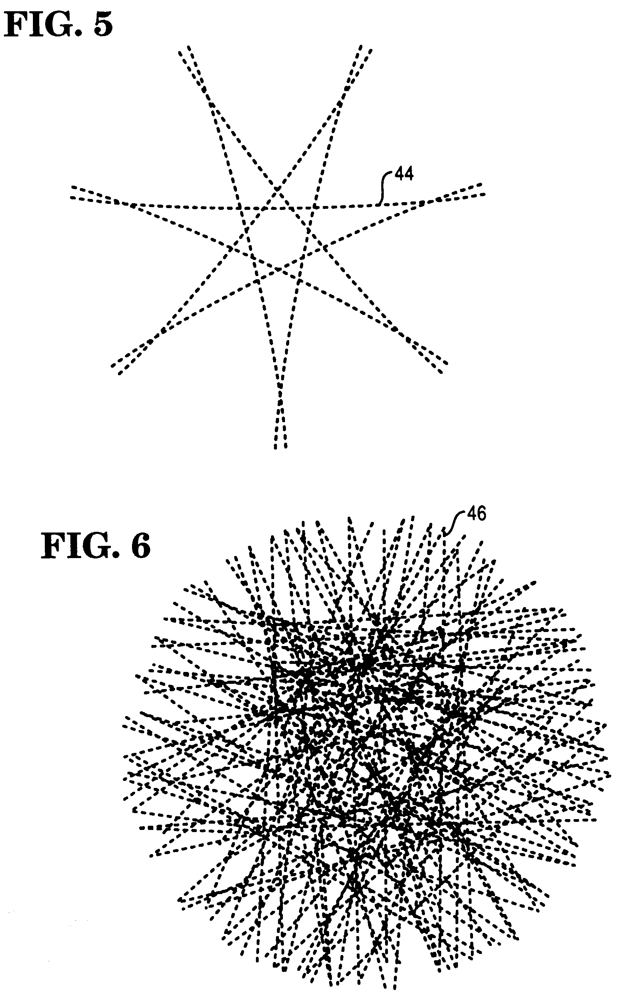

Referring to Fig. 2, there is shown a side diagrammatic representation of the scanning system 26 which is mounted within the housing structure 20. Included in the system is a scan module 28 which generates a first multi-line scan pattern 44( Fig. 5) and a rotating reflecting mirror 30 which is mounted offset to the rotational axis of the drive shaft 32 of a motor 34 which engages and rotates the mirror 30. The drive shaft 32 is orientated in a direction perpendicular to a reference plane 36 which in turn is orientated at a 45 degree angle to the spin axis 38 of a drive shaft 50 (Figs. 3 and 4) located in the scan module 28. The spin axis 38 corresponds to a first scan axis about which the scan pattern 44 (Fig. 5) is projected. The construction of the scan module is fully disclosed i U.S. Patent No. 4,971,410. The motor 34 and the scan module 28 are mounted on a support member 40 secured to the housing structure 20. Mounted adjacent the support member 40 is a printed circuit board 42 which supplies power to the motor 34 and the scan module 28 from a battery (not shown) mounted adjacent the printed circuit board 42. The scan module 28 will generate the scan pattern 44 (Fig. 5) which comprises a seven sided star shaped scan pattern. This scan pattern when projected on the rotating reflecting mirror 30 will be rotated by the mirror to generate the multi-line scan pattern 46 (Fig. 6). This scan pattern is projected through the aperture 24 (Fig. 1 and 2) about a second scan axis 41 (Fig. 2) for scanning a bar code label positioned adjacent the aperture 24.

Mounted to the sidewall 43 of the housing member 26 is an infrared LED member 45 which is mounted offset to the sidewall 43 to project an infrared beam 47 through the aperture 24. Upon the positioning of a merchandise item or a bar code label adjacent the aperture 24, the infrared beam 47 will be reflected off the item or label in a direction which is detected by the detector 25 (Figs. 1 and 2). In response to receiving the reflected infrared beam 47, the detector 25 will generate an electrical signal in a manner that is well known in the art, which signal is used to initiate a scanning operation of the bar code scanner 18. Upon removal of the item or label from adjacent the aperture 24, the reflected beam will be removed from the detector 25, resulting in the scanner 18 being disabled from operation.

Referring to Fig. 3, there is shown a more detailed schematic representation of the scanning system located within the housing structure 20. The scan module 28 includes a laser source 48 such as a laser diode positioned at one end of a hollow drive shaft 50 driven by a motor 52. Mounted on the other end of the drive shaft is an optical transceiver 54 which, as will be described more fully hereinafter, includes a deflecting portion 88 (Fig. 4) extending obliquely across the spin axis 38 (Fig. 2) of the drive shaft 50. Upon the operation of the laser source 48 as a result of the detector 25 receiving the reflected infrared beam 47, a laser beam will be projected through the drive shaft 50 to be deflected by the deflecting portion 88 of the transceiver 54 in a direction generally perpendicular to the spin axis 38 (Fig. 2) of the drive shaft 50 towards a ring of pattern forming mirrors 56. The mirrors 56 will deflect the received laser light beams through the opening of the scan module towards the reflecting mirror 30 rotated by the motor 34 which in turn will generate the scan pattern 46 (Fig. 6). Preferably, motors 52 and 34 rotate in opposite directions.

The scan pattern 46 is projected through the aperture 24 (Fig. 1) in the housing structure 20 towards a bar code label 58 positioned adjacent the aperture 24. The light reflected from the bar code label is redirected towards the reflecting mirror 30 which in turn deflects the reflected light beams towards the pattern forming mirrors 56 which direct the light beams to a collection portion 90 (Fig. 4) of the optical transceiver 54. The collection portion 90 deflects the received light beam towards a photodetector 60 located in the front portion of the scan module 28. The photodetector 60 will generate signals representing the intensity of the light beams reflected off the bar code label 58, which signals are transmitted over line 62 to the printed circuit board 42. The printed circuit board 42 contains processing means (not shown) for controlling the operation of the scanner 18, for decoding the signals generated by the photodetector 60 and for transmitting the decoded signals over the coiled cable 62 to a remote processing member 63. When the optical scanner 18 is mounted on a supporting surface, power is supplied to the printed circuit board and to the laser diode 48, the motor 52 and the photodetector 60 by means of a power source such as an electrical plug 66 via the cable 62 and the remote processing unit 63. The printed circuit board 42 contains electronics for operating a loud speaker 68 or a green indicator light 70 indicating a valid read operation. The electronics on the printed circuit board 42 will also operate a red indicator light 72 indicating a bad read operation.

Referring now to Fig. 4, there is shown a sectional side view of the scan module 28. The scan module includes a molded frame support member 74 having a plurality of latching portions 76. Mounted within the support member 74 is the motor 52. Journaled within the motor 52 by bearings 78 is the hollow drive shaft 50 extending through the motor 52. Mounted within a rear extension portion 80 of the frame support member 74 is a brass laser diode support member 82 supporting the laser diode 48 and a collimating and a focusing lens member 84, both of which are in alignment with the spin axis 38 of the drive shaft 50. The diode 48 outputs a diverging light beam which is collimated and focused on a reference plane (not shown) located in front of the scanning unit by the lens member 84.

Slidably mounted within the frame support member 74 is a molded mirror support member 86 constructed of any type of polycarbonate plastic which includes a plurality of acrylic turning or pattern mirrors 56, each of which is attached to and extends outwardly from the support member 86 at an angle of approximately thirty-three degrees and in which each mirror is offset to each of the other mirrors 56 by approximately three degrees. The number of mirrors employed is controlled by the number of scan lines required for the scan pattern. In the scan module 28, there are seven turning mirrors 56. Secured to the front end of the drive shaft 50 is the optical transceiver 54 comprising a flat deflecting mirror portion 88 which extends obliquely across the spin axis 38 of the drive shaft 50 and a collection mirror portion 90 comprising a sloping aspheric concave surface 92 for collecting the scanning light beams reflected from a scanned bar code label.

The deflecting mirror portion 88 extends through a slot 94 in the collecting surface 92 of the collection mirror portion 90. The mirror portion is orientated at an oblique angle to the surface 92. Mounted within a protruding housing portion 96 of a support member 98 is the photodetector 60 mounted within a holder 100 secured to the inside end portion of the housing portion 96.

The operation of the laser diode 48 will output a narrow laser light beam along the spin axis 38 of the scan module 28. The laser light beam will travel through the hollow drive shaft 50 where it impacts on the rotating deflecting mirror portion 88 of the optical transceiver 54. The light beam designated as 102 in Fig. 3 will be deflected outwardly by the deflecting mirror portion 88 to impact on the turning mirrors 56 which in turn deflect the light beam in a forward direction through the acrylic support member 98 forming the star shaped scanning pattern 44 (Fig. 5) As previously described, this scan pattern is projected onto the rotating tilted mirror member 30 which will rotate the scan pattern 44 about the scan axis 41 (Fig. 2) forming the highly-dense multi-line scan pattern 46 (Fig. 6).

By varying the speed of the motor 52 in the scan module 28 and the motor 34, the number of scan lines in the scan pattern 46 can be varied. The speed of motor 34 is one-twentieth the speed of motor 52, which in the preferred embodiment is forty-eight hundred rpm. As mentioned above, by increasing the speed ratio between the motor 52 and the motor 34 by decreasing the speed of the motor 34, the scan pattern generated effectively reads bar code labels having high aspect ratio.

The scan pattern 46 (Fig. 2) is projected through the glass aperture 24 in the top surface 22 off the housing structure 20 for scanning the bar code label 58 (Fig. 3). The laser light beams reflected from the bar code label 58 will be redirected back to the turning mirrors 56 which deflects the light beams to the collection portion 90 of the optical transceiver 54 which will focus the light beams at the photodetector 60. The photodetector 60 will generate electrical signals representating the light intensity of the received light beams and transmit the electrical signals over the line 62 (Fig. 3) to the printed circuit board 42 where the processing means located on the printed circuit board will decode the received electrical signals and transmit the data either over cable 63 (Fig. 3) or store the information in a storage unit (not shown) located on the printed circuit board which is to be retrieved later.

It will be seen that by this construction a very dense multiple line scan pattern is generated by a compact bar code scanner which may be used as a hand-held scanner or as a stationary scanner and will enable the bar code scanner to improve the efficiency of reading bar code labels irrespective of their size or orientation.

## Claims

1. A bar code scanner (18) comprising a first scanning means (28) including a plurality of stationary pattern forming mirrors (56) and a rotatable optical transceiver (54) driven by first drive means (50, 52) for directing a light beam towards said pattern forming mirrors to produce a plurality of different scan lines forming a multiple line scan pattern and for collecting light reflected from articles having coded indicia (58) to be scanned, characterized by a second scanning means comprising a single mirror (30) which is mounted on a rotatable drive shaft (32) driven by second drive means (32, 34), and which is arranged to reflect the scan lines from said first scanning means (28) towards said articles, said mirror (30) being offset from the perpendicular to the axis of rotation of said drive shaft (32) so as to rotate said first multiple line scan pattern about an axis (41) and thereby generate a second multiple line scan pattern (46) having a greater number of scan lines than said first scan pattern (44).

2. A scanner according to claim 1, characterized in that said first scanning means (28) produces scan lines that form a star-shaped scan pattern.

3. A scanner according to either claim 1 or claim 2, characterized in that said second drive means (32, 34) is arranged to be driven at a different speed from said first drive means (50, 52).

4. A scanner according to any one of the preceding claims, characterized by optoelectric light source and detector means (42,25) for detecting the presence of a bar code label adjacent said scanner, and means for operating said scanner in response to the detection of said bar code label.

5. A scanner according to claim 4, characterized by a housing member (20) including a top surface (22) in which is located an aperture (24) through which said second multiple line scan pattern passes, said detector means (25) being mounted in said top surface (22) adjacent said aperture (24).

## Patentansprüche

1. Barcodeleser (18) aufweisend eine erste Abtasteinrichtung (28) mit einer Vielzahl von stationären Musterformspiegeln (56) und einem drehbaren optischen Sender-Empfänger (54), der durch eine erste Antriebseinrichtung (50, 52) betätigt wird, einen Lichtstrahl auf die Musterformspiegel zu richten, um eine Vielzahl von verschiedenen Abtastzeilen zu erzeugen, die ein mehrzeiliges Abtastmuster bilden, und um Licht zu sammeln, das von Gegenständen mit abzutastenden codierten Kennungen (58) reflektiert wird,
gekennzeichnet durch
eine zweite Abtasteinrichtung mit einem einzelnen Spiegel (30), der auf einer durch eine zweite Antriebseinrichtung (32, 34) angetriebenen, drehbaren Antriebswelle (32) befestigt und so angeordnet ist, daß er die Abtastzeilen von der ersten Abtasteinrichtung (28) auf die Gegenstände reflektiert, wobei der Spiegel (30) aus der Lotrechten zur Rotationsachse der Antriebswelle (32) versetzt wird, um das erste mehrzeilige Abtastmuster um eine Achse (41) zu drehen und dadurch ein zweites mehrzeiligs Abtastmuster (46) mit einer größeren Anzahl von Abtastzeilen als das erste Abtastmuster (44) zu erzeugen.

2. Barcodeleser nach Anspruch 1, dadurch gekennzeichnet, daß die erste Abtasteinrichtung (28) Abtastzeilen erzeugt, die ein sternförmiges Abtastmuster bilden.

3. Barcodeleser nach Anspruch 1 oder Anspruch 2, dadurch gekennzeichnet, daß die zweite Antriebseinrichtung (32, 34) so angeordnet ist, daß sie mit einer anderen Geschwindigkeit angetrieben wird wie die erste Antriebseinrichtung (50, 52).

4. Barcodeleser nach einem der vorhergehenden Ansprüche, gekennzeichnet durch eine optoelektrische Lichtquellen- und Detektoreinrichtung (42, 25) zur Erfassung der Anwesenheit eines Strichcodeetiketts an der Abtastvorrichtung und eine Einrichtung zur Betätigung der Abtastvorrichtung unter Ansprechen auf die Erfassung des Strichcodeetiketts.

5. Barcodeleser nach Anspruch 4, gekennzeichnet durch ein Gehäuseelement (20) mit einer Oberseite (22), in der sich ein Ausschnitt (24) befindet, durch welchen das zweite mehrzeilige Abtastmuster hindurchgeht, wobei die Detektoreinrichtung (25) direkt an dem Ausschnitt (24) in der Oberseite (22) angebracht ist.

## Revendications

1. Un dispositif de balayage des codes à barres (18) comprenant un premier moyen de balayage (28) comportant une pluralité de miroirs formateurs de dessins stationnaires (56) et un émetteur-récepteur optique rotatif (54) entraîné par un premier moyen d'entraînement (50, 52) pour diriger un faisceau lumineux vers lesdits miroirs formateurs de dessins pour produire une pluralité de lignes de balayage différentes formant un dessin de balayage à lignes multiples et pour capter la lumière réfléchie à partir d'articles ayant des indices codés (58) à balayer, caractérisé par un deuxième moyen de balayage comprenant un seul miroir (30) qui est monté sur un arbre d'entraînement rotatif (32) entraîné par un deuxième moyen d'entraînement (32, 34), et qui est arrangé pour réfléchir les lignes de balayage à partir dudit premier moyen de balayage (28) vers lesdits articles, ledit miroir (30) étant décalé de la perpendiculaire à l'axe de rotation dudit arbre d'entraînement (32) de façon à faire tourner ledit premier dessin de balayage à lignes multiples autour d'un axe (41) et, ainsi, générer un deuxième dessin de balayage à lignes multiples (46) ayant un plus grand nombre de lignes de balayage que ledit premier dessin de balayage (44).

2. Un dispositif de balayage conformément à la revendication 1, caractérisé en ce que ledit premier moyen de balayage (28) produit des lignes de balayage qui forment un dessin de balayage en forme d'étoile.

3. Un dispositif de balayage conformément à la revendication 1 ou à la revendication 2, caractérisé en ce que ledit deuxième moyen d'entraînement (32, 34) est arrangé pour être entraîné à une vitesse différente dudit premier moyen d'entraînement (50, 52).

4. Un dispositif de balayage conformément à l'une quelconque des revendications précédentes, caractérisé par une source de lumière optoélectrique et un moyen détecteur (42, 25) pour détecter la présence d'une étiquette code à barres au droit dudit dispositif de balayage, et un moyen pour actionner ledit dispositif de balayage en réponse à la détection de ladite étiquette code à barres.

5. Un dispositif de balayage conformément à la revendication 4, caractérisé par un élément logement (20) comportant une surface supérieure (22) dans laquelle est située une ouverture (24) à travers laquelle ledit deuxième dessin de balayage à lignes multiples passe, ledit moyen détecteur (25) étant monté dans ladite surface supérieure (22) au droit de ladite ouverture (24).
